**Europäisches Patentamt**

(19) **European Patent Office**

**Office européen des brevets**

(11) Veröffentlichungsnummer: **0 158 128**

**B1**

(12) **EUROPÄISCHE PATENTSCHRIFT**

(45) Veröffentlichungstag der Patentschrift:
**25.11.87**

(51) Int. Cl.⁴: **C 09 D 5/44,** C 08 G 8/38,
C 08 G 14/14, C 08 G 59/56

(21) Anmeldenummer: **85102676.5**

(22) Anmeldetag: **08.03.85**

(54) **Verfahren zur Herstellung kathodisch abscheidbarer Elektrotauchlack-Bindemittel.**

(30) Priorität: 16.03.84 AT 884/84
12.07.84 AT 2243/84
06.08.84 AT 2526/84
15.11.84 AT 3608/84

(43) Veröffentlichungstag der Anmeldung:
16.10.85 Patentblatt 85/42

(45) Bekanntmachung des Hinweises auf die Patenterteilung:
25.11.87 Patentblatt 87/48

(84) Benannte Vertragsstaaten:
BE CH DE FR GB IT LI NL SE

(56) Entgegenhaltungen:
WO-A-83/00872
AT-B-368 180
FR-A-2 226 445
GB-A-2 050 381
US-A-4 387 197

Surface Coating Resin Index 1977, Seiten 46, 82

(73) Patentinhaber: **Vianova Kunstharz
Aktiengesellschaft, A-8402 Werndorf (AT)**

(72) Erfinder: **Paar, Willibald, Dr., Haberlandtweg 23,
A-8045 Graz (AT)**
Erfinder: **Gmoser, Johann, Radegunderstrasse 30,
A-8045 Graz (AT)**
Erfinder: **Hönig, Helmut, Dr., Seebachergasse 10,
A-8010 Graz (AT)**
Erfinder: **Daimer, Wolfgang, Dipl.- Ing.,
Rosenberggürtel 37, A-8010 Graz (AT)**

(74) Vertreter: **Pitter, Robert, Dr., Postfach 191
Leechgasse 21, A-8011 Graz (AT)**

LIBER, STOCKHOLM 1987

**Beschreibung**

Die vorliegende Erfindung betrifft ein Verfahren zur Herstellung kathodisch abscheidbarer selbstvernetzender Elektrotauchlack-Bindemittel auf der Basis von Umsetzungsprodukten von Epoxidharz-Amin-Addukten mit Formaldehyd und Phenolen, welche gegebenenfalls anteilig durch formaldehydreaktive Aminoverbindungen oder Aminoalkylierungsprodukte von monosubstituierten Phenolen ersetzt sein können.

Kathodisch abscheidbare Lackbindemittel auf der Basis von Umsetzungsprodukten von Mannich-Basen und Epoxidharzen werden in einer Reihe von Veröffentlichungen beschrieben. Gemäß den DE-OSen 20 33 770, 23 20 301, 23 57 045, 2419 179, 25 41 801, 25 54 080, 27 11 385 und 30 45 251 werden Mannich-Basen, welche aus mehrwertigen Phenolen, sekundären Aminen und Formaldehyd erhalten wurden, mit Epoxidharzen umgesetzt, wobei sowohl die Phenole als auch die Epoxidharze Modifikationen verschiedener Art, z. B. mit halbverkappten Diisocyanaten, anderen Phenolen oder Metallsalzen unterworfen werden.

Wie sich aus den genannten Literaturstellen ergibt, benötigen Bindemittel dieser Art Einbrenntemperaturen um 190 Grad C zur Vernetzung, wobei auch dann die Filme z. B. in ihrer Salzsprühfestigkeit keineswegs den Ansprüchen der Praxis in der Automobilindustrie gerecht werden.

Überdies erfolgt bei der Vernetzung dieser Produkte eine Abspaltung von Formaldehyd und Aminen, was zu einer Belästigung der Umwelt führen kann. Ein Großteil der obengenannten Modifikationen dient daher weniger einer Verbesserung der Filmeigenschaften, als einer Verminderung der Abspaltprodukte. So wird im Falle der Modifizierung mit halbblockierten Diisocyanaten in der DE-OS 25 54 080 ausdrücklich angegeben, daß die Isocyanatgruppen zur Vernetzung wenig beitragen und nur zum Einfangen frei werdender Amine dienen.

Aus der PCT-Veröffentlichung Nr. WO 83/00872 sind kathodisch abscheidbare Elektrotauchlack-Bindemittel bekannt, welche durch Mischkondensation von partiell entfunktionalisierten Epoxidharzen und Phenolresolen und gleichzeitige oder anschließende Umsetzung der Epoxidgruppen mit primären oder sekundären Aminen erhalten werden. Ein wesentlicher Nachteil bei der Herstellung dieser Produkte liegt in der Notwendigkeit der Herstellung der Phenolresole, was bekanntermaßen mit einem beträchtlichen Zeitaufwand verbunden ist und relativ große Mengen von phenol- und salzhaltigen Abwässern ergibt. Gegebenenfalls im Harz verbleibende Salzreste können überdies zu Störungen bei der elektrischen Abscheidung führen.

Aus der GB-A-2 050 381 sind kathodisch abscheidbare Überzugsmittel bekannt, welche durch Mischen und Erwärmen auf mindestens 50 Grad C aus Epoxidharz-Aminaddukten und veretherten Phenol-Formaldehyd- und/oder Aminoplastharzen erhalten werden. Durch eine teilweise Kondensation der Komponenten soll die Emulstionsstabilität der protonierten Produkte in Wasser, im Vergleich zu Mischungen der genannten Komponenten verbessert werden. In den gemäß dieser Literaturstelle eingesetzten Epoxidharz-Aminaddukten liegen im wesentlichen tertiäre Aminogruppen vor, da die Umsetzung unter Bedingungen erfolgt, welche zu einer weitgehend vollständigen Reaktion der Aminowasserstoffe führen. Aufgrund ihres Aufbaues benötigen Produkte dieser Art für eine ausreichende Vernetzung Einbrenntemperaturen von über 170 Grad C.

Es wurde nun gefunden, daß man kathodisch abscheidbare Elektrotauchlack-Bindemittel, welche bei Einbrenntemperaturen von 150 bis 160 Grad C Filme mit optimalem Korrosionsschutz ergeben und in einfacher Weise hergestellt werden können erhält, wenn man sekundäre Aminogruppen aufweisende Epoxidharz-Aminaddukte in einer Verfahrensstufe mit Formaldehyd oder unter den Reaktionsbedingungen Formaldehyd abspaltenden Verbindungen und Phenolen, welche gegebenenfalls anteilig durch formaldehydreaktive Aminoverbindungen oder Aminoalkylierungsprodukte von monosubstituieten Phenolen ersetzt sein können, kondensiert.

Die Erfindung betrifft demgemäß ein Verfahren zur Herstellung von kathodisch abscheidbaren Elektrotauchlack-Bindemitteln auf der Basis von durch Umsetzung mit Phenol-Formaldehyd-Kondensaten oder Amin-Formaldehyd-Kondensaten modifizierten Epoxidharzen, welches dadurch gekennzeichnet ist, daß man ein Epoxidharz, welches mindestens 2 Epoxidgruppen und ein Epoxidäquivalentgewicht von 180 bis 1000 aufweist, mit

0,6 bis 1,0 Mol primäre Aminogruppen pro verfügbarer Epoxidgruppe eines primären Monoalkylamins und/oder eines primären Alkylendiamins und/ oder eines primär-tertiären Alkylendiamins und

0 bis 0,4 Mol pro verfügbarer Epoxidgruppe einer Carboxylverbindung oder eines sekundären Amines bei 50 bis 120 Grad C bis zu einem Epoxidwert von praktisch Null umsetzt und das resultierende Epoxidharz-Amin-Addukt mit, bezogen auf 1 Mol NH-Gruppen,

0,5 bis 1 Mol eines ein- oder mehrkernigen Phenols und/oder Alkylphenols und/oder eines Aminoalkylierungsproduktes von monosubstituierten ein- oder zweikernigen Phenolen oder gegebenenfalls anteilig einer formaldehydreaktiven Verbindung vom Typ des Harnstoffs, des Melamins oder des Guanamins und mit

0,25 bis 0,9, vorzugsweise 0,6 bis 0,8 Mol Formaldehyd pro formaldehydreaktiver Stelle bei 50 bis 90 Grad C bis zu einer weitgehenden Bindung des Formaldehyds umsetzt und das Reaktionsprodukt nach partieller oder vollständiger Neutralisation mit Säuren und gegebenenfalls nach Zusatz wasserverträglicher organischer Lösungsmittel mit Wasser verdünnt.

Das erfindungsgemäße Verfahren zeichnet sich durch seine einfache Durchführbarkeit aus. Ein besonderer Vorteil liegt im Fehlen von unbrauchbaren Nebenprodukten.

Die aus den erfindungsgemäß hergestellten Bindemitteln in geeigneter Weise formulierten Überzugsmittel zeigen ausgezeichnete Eigenschaften bei der elektrischen Abscheidung sowie eine ausgezeichnete Stabilität in Form des Badmaterials. Der Grund dafür dürfte in der Hydrolysefestigkeit des durch direkte Verknüpfung von Epoxidharz, Amin und Phenol entstandenen Moleküls zu finden sein. Die Produkte ergeben bereits bei Einbrenntemperaturen von 150 Grad C auch ohne Verwendung von Katalysatoren Filme mit optimaler Korrosionsfestigkeit. Die Menge der Spaltprodukte beim Einbrennen ist gering und besteht im wesentlichen aus Wasser und geringen Anteilen an Formaldehyd.

Die für das erfindungsgemäße Verfahren einsetzbaren Epoxidharze sind handelsübliche Di- oder Polyepoxidverbindungen, wie sie durch Umsetzung von mehrwertigen Phenolen, insbesonders dem Bisphenol A oder Phenolnovolaken und Epichlorhydrin erhalten werden. Gegebenenfalls können auch andere Epoxidharze, z. B. auf Basis von Polyolen eingesetzt werden. Produkte dieser Art sind dem Fachmann bekannt und werden in der Literatur in großer Zahl beschrieben. Bevorzugt werden für das erfindungsgemäße Verfahren Epoxidharze auf der Basis von Bisphenol A oder Phenolnovolaken mit einem Epoxidäquivalentgewicht von 180 bis 1000 eingesetzt.

Die Epoxidharze werden in der ersten Reaktionsstufe, vorzugsweise in Gegenwart eines aprotischen Lösungsmittels, mit einem primären Amin zu einem sekundäre Aminogruppen aufweisenden Epoxidharz-Amin-Addukt umgesetzt. Pro verfügbarer Epoxidgruppe des Epoxidharzes kommen dabei 0,6 bis 1,0 Mol primäre Aminogruppen zum Einsatz, wobei als Amine primäre Monoalkylamine, vorzugsweise solche, deren Alkylrest 4 und mehr Kohlenstoffatome aufweist oder primäre Alkylendiamine oder Diamine, welche neben der primären Aminogruppe noch eine tertiäre Aminogruppe, z. B. eine Dialkylaminogruppe aufweisen, eingesetzt werden. Als bevorzugte Vertreter seien das n- bzw. Isobutylamin, Hexylamine, das 2-Ethylhexylamin, Ethylendiamin und seine Homologen sowie prim.-.tert. Diamine, wie Dimethylaminopropylamin, Diethylaminopropylamin und Homologe dieser Reihe genannt. Besonders bevorzugt werden Mischungen aus Alkylaminen bzw. Alkylendiaminen und Dialkylaminoalkylaminen eingesetzt. Die Umsetzung erfolgt bei 50 bis 90 Grad C.

Als aprotische Lösungsmittel, deren Anwesenheit für die Reaktionsführung in einzelnen Fällen wesentlich ist, werden aromatische Kohlenwasserstoffe, wie Toluol oder Xylol, oder Glykoldiether, wie Diethylenglykoldimethylether eingesetzt. Die Menge des Lösungsmittels beträgt zwischen 10 und 50 % bezogen auf das Epoxidharz-Amin-Addukt.

Das Epoxidharz-Amin-Addukt kann gegebenenfalls bis zu 40 Mol-%, bezogen auf die verfügbaren Epoxidgruppen, mit Carboxylverbindungen, wie gesättigten oder ungesättigten Fettsäuren, Carboxylgruppen aufweisenden Polyestern oder entsprechenden anderen Präpolymeren, z. B. auf Acrylatbasis, modifiziert sein. Als Fettsäuren werden bevorzugt Monocarbonsäuren mit 7 bis 20 C-Atomen synthetischer oder natürlicher Herkunft eingesetzt. Beispielsweise können Benzoesäure, Isooctan-, Isononansäure, $\alpha$-verzweigte synthetische Monocarbonsäuren mit $C_8$ - $C_{12}$-Alkyl-resten (KOCH-Säuren) oder Ölfettsäuren und Tallölfettsäuren verwendet werden. Andere Monocarboxylverbindungen zur Modifizierung der Epoxidharz-Amin-Addukte sind Halbester von Dicarbonsäuren mit Monoalkoholen mit mehr als 3 C-Atomen oder mit Oxazolidinen modifizierte Carbonsäuren. Die Herstellung der letzteren ist beispielsweise in der AT-PS 375 946 beschrieben. Die Oxazolidine dienen dabei als zusätzliche Formaldehydspender. Die Umsetzung mit den Carboxylgruppen tragenden Modifikatoren erfolgt zweckmäßig vor der Umsetzung mit den Aminen bei 90 bis 120 Grad C.

In einer besonderen Ausführungsform werden als Carboxylverbindungen, welche neben der primären Aminoverbindung zum Einsatz kommen können, besonders vorteilhaft Adduktverbindungen von Maleinsäureanhydrid an ungesättigte Öle und/oder ungesättigte Kohlenwasserstoffverbindungen, deren Anhydridgruppen unter Halbesterbildung mit Monohydroxylverbindungen geöffnet wurden, wobei die freien Carboxylgruppen gegebenenfalls teilweise mit Monoepoxidverbindungen umgesetzt werden, eingesetzt. Durch diese Modifikation kann die Filmoberfläche und die Flexibilität der Filme wesentlich verbessert werden.

Die zur Modifizierung des Epoxidharz-Amin-Adduktes geeigneten Carboxylverbindungen dieser Art werden in bekannter Weise durch Anlagerung von Maleinsäureanhydrid an ungesättigte Öle, z. B. Holzöl, Leinöl, dehydratisiertes Rizinusöl, Sojaöl, Sonnenblumenöl und ähnliche natürliche Öle erhalten. Ebenso können auch synthetisch hergestellte hydroxylfreie Ester der in den obengenannten Ölen enthaltenen Fettsäuren bzw. der Tallölfettsäuren mit Polyolen als Ausgangsmaterial herangezogen werden. Bevorzugt werden als Polyenverbindung ungesättigte niedermolekulare Kohlenwasserstoffpolymere oder -oligomere zur Umsetzung mit dem Maleinsäureanhydrid herangezogen. Beispiele für diese Verbindungsklasse sind die sogenannten Polybutadienöle, das sind flüssige Oligomere des Butadiens mit verschiedener stereospezifischer Struktur oder die entsprechenden Pentadiene oder Cyclopentadiene. Diese Verbindungen weisen üblicherweise Molekulargewichte zwischen 400 und 3000 auf. Selbstverständlich können auch Mischungen dieser Ausgangsstoffe zur Adduktbildung mit dem Maleinsäureanhydrid herangezogen werden.

Die Menge des Maleinsäureanhydrids wird so gewählt, daß die Carboxylverbindung eine Säurezahl von 30 - 130 mg KOH/g, vorzugsweise 35 - 80 mg KOH/g aufweist.

Zur Halbesterbildung werden die Maleinsäureanhydrid-Addukte mit Monohydroxylverbindungen in bekannter Weise bei 50 bis 150°C umgesetzt. Als Monohydroxylverbindungen kommen dabei gesättigte oder ungesättigte Monoalkohole mit 1 bis 18 C-Atomen, wie Methanol und seine Homologe, Fettalkohole, Allylalkohol u. ä. zum Einsatz. Ebenso können als Monohydroxylverbindungen auch Glykolmonoester der (Meth)acrylsäure, wie Hydroxyethyl(meth)acrylat, Hydroxypropyl(meth)acrylat sowie die weiteren homologen und isomeren Verbindungen eingesetzt werden. Bei den ungesättigten Monohydroxylverbindungen wird vorteilhafterweise die Umsetzung in Gegenwart von Inhibitoren, wie Hydrochinon, durchgeführt.

Eine Möglichkeit zur Verminderung der Anzahl der Carboxylgruppen dieser Halbester besteht in der Reaktion dieser Gruppen mit Monoepoxidverbindungen, wie Estern von epoxidierten Fettsäuren oder Glycidylestern oder -ethern. Gut geeignet für diesen Zweck sind beispielsweise die Glycidylester der KOCH-Säuren, insbesonders solche, welche am tertiären Kohlenstoffatom mindestens einen Fettsäurerest mit mehr als 8 C-Atomen aufweisen.

Die Umsetzung dieser Gruppe der Carboxylverbindungen mit den Epoxidgruppen des Epoxidharzes erfolgt bei 90 bis 150°C. Vorteilhafterweise wird die Reaktion bis zur vollständigen Bindung der modifizierenden Komponente geführt.

Als weitere Modifikatoren können auch sekundäre Amine, insbesonders sekundäre Alkylamine eingesetzt werden. Durch die dabei resultierenden tertiären Aminogruppen kann die Löslichkeit der Produkte beeinflußt werden.

Die zum Epoxidharz-Amin-Addukt führende Reaktionsstufe wird bis zu einem Epoxidwert von praktisch 0 geführt, d. h., daß die erhaltenen Epoxidharz-Amin-Addukte frei von Epoxidgruppen sind.

Das resultierende gegebenenfalls mit Carboxylverbindungen modifizierte Epoxidharz-Amin-Addukt wird in der nächsten Reaktionsstufe mit Formaldehyd oder einer unter den Reaktionsbedingungen Formaldehyd abspaltenden Verbindung und einem ein- oder mehrwertigen Phenol und/oder Alkylphenol und/oder einem Aminoalkylierungsprodukt von monosubstituierten ein- oder zweiwertigen Phenolen oder gegebenenfalls anteilig mit einer formaldehydreaktiven Verbindung vom Typ des Harnstoffs, des Melamins oder des Guanamins umgesetzt. Dabei werden pro Mol NH-Gruppen im Epoxidharz-Amin-Addukt 0,5 bis 1 Mol Phenol und pro formaldehydreaktiver Stelle 0,25 bis 0,9, Mol Formaldehyd eingesetzt. Die Reaktion erfolgt bei 50 bis 90°C und wird bis zu einer möglichst weitgehenden Bindung des eingesetzten Formaldehyds geführt.

Als Phenolkomponente wird das Phenol in seinen handelsüblichen Lieferformen, z. B. liquefactum (90 %), oder Alkylphenole, wie die Methyl-, Butyl- oder höhere Alkylphenole, wie Nonylphenol oder Diphenole der Formel Ph - R - Ph, wobei R einen geradkettigen oder verzweigten Alkylenrest mit 1 bis 5 C-Atomen darstellt, vorzugsweise das Bisphenol A , eingesetzt. Die eingesetzten Phenole müssen zur Erzielung der gewünschten Eigenschaften mindestens 2 formaldehydreaktive Stellen aufweisen.

In einer Verfahrensvariante, durch welche die für eine ausreichende Wasserverdünnbarkeit notwendige Säuremenge vermindert werden kann, werden die obengenannten Phenole ganz oder teilweise durch Aminoalkylierungsprodukte von monosubstituierten ein- oder zweikernigen Phenolen ersetzt, wobei der Substituent ein Alkyltest mit mindestens 4 C-Atomen oder ein Aralkylrest ist und das Amin mindestens 2 Amino-Wasserstoffe und mindestens 4 C-Atome aufweist.

Abgesehen von der verbesserten Löslichkeit werden durch diese Strukturen zusätzliche flexibilsisierende und verlauffördernde Gruppen in das Bindemittelmolekül eingebaut, wodurch die Verwendung hochsiedender Lösungsmittel in den Lackformulierung weitgehend überflüssig wird.

Die für diese Verfahrensvariante eingesetzten Aminoalkylierungsprodukte werden im Sinne einer MANNICH-Reaktion aus Phenolen, Aminen und Formaldehyd hergestellt. Zum Unterschied von den kathodisch abscheidbaren Bindemitteln auf Basis von MANNICH-Basen, wie sie im Stand der Technik zitiert sind, stellt die MANNICH-Reaktion im vorliegenden Fall nur eine zusätzliche Modifizierung der Phenolkomponente dar. Durch den bevorzugten Einsatz primärer bzw. höhermolekularer Amine wird durch diese Modifizierung die Menge der beim Einbrennen entstehenden Spaltprodukte nur unwesentlich erhöht.

Für die Herstellung der erfindungsgemäß eingesetzten Zwischenprodukte werden als monosubstituierte einkernige Phenole vor allem Alkylphenole eingesetzt, deren Alkylrest mindestens 4 Kohlenstoffatome aufweist. Vertreter dieser Gruppe sind die Butylphenole und deren höhere Homologe, vorzugsweise die mit 8 und mehr Kohlenstoffatomen im Substituenten, wie p-Isooctylphenol oder p-Nonylphenol. Als Substituenten können auch Aralkylreste vorkommen, wie dies beim Benzylphenol oder beim Cumylphenol der Fall ist. Aus der Gruppe der zweikernigen Phenole sind beispielsweise die Bis-hydroxyarylalkane, wie das Bis-(4-hydroxyphenyl)methan oder, vorzugsweise, das 2,2-Bis-(4-hydroxyphenyl)-propan (Bisphenol A) zu nennen.

Als Amine werden für diese Zwischenprodukte Verbindungen eingesetzt, die pro Molekül mindestens zwei Aminowasserstoffe und mindestens 4 Kohlenstoffatome aufweisen. Zu diesen Verbindungen zählen primäre (Alkanol)amine, wie die Butylamine, deren höheren Homologe z. B. das Ethylhexylamin, die entsprechenden Alkanolamine, die entsprechenden primären Diamine, wie das Hexamethylendiamin oder primär-tertiäre Diamine, z. B. das N,N-Diethylaminopropylamin. Geeignete Amine können auch durch Umsetzung von primären Diaminen (1 Mol) mit Acrylestern oder Monoepoxidverbindungen (2 Mol) erhalten werden. Als besonders geeignete Beispiele seien dafür Reaktionsprodukte des Hexamethylendiamins mit Butylacrylat und 2-Ethylhexylacrylat bzw. mit Glycidylestern von KOCH-Säuren genannt.

Die Herstellung der für das erfindungsgemäße Verfahren geeigneten Zwischenprodukte erfolgt in der Weise, daß die Amine zusammen mit den Phenolen auf 70 bis 80°C erwärmt werden. Nach Zugabe des Formaldehyds, vorzugsweise in Form von Paraformaldehyd, erfolgt die Umsetzung bei 80 bis 130°C, wobei das Reaktionswasser mit Hilfe eines Schleppmittels entfernt wird. Je nach Art der Reaktanten kann bei der Zugabe des Formaldehyds eine mehr oder weniger starke exotherme Reaktion auftreten. Die Reaktion ist beendet, wenn pro Mol Phenol 1 Mol Reaktionswasser abgetrennt wurde.

Produkte mit weitgehend gleichen Eigenschaften, werden bei einer Verfahrensvariante erhalten, wobei die Aminoalkylierung der Phenole in Gegenwart des Epoxidharz-Amin-Adduktes durchgeführt wird. Diese Variante gestattet die Herstellung der erfindungsgemäßen Produkte in einem "Eintopfverfahren". Nach Herstellung des Epoxidharz-Amin-Adduktes wird das für die Aminoalkylierung vorgesehene Amin, Phenol und der Formaldehyd zugegeben und 1 bis 3 Stunden bei 70 bis 90°C kondensiert. Das dabei entstehende Reaktionswasser verbleibt im Ansatz. Nach dieser Reaktionszeit werden die vorgesehenen Phenol- und Formaldehydmengen zugesetzt und die Reaktion bei 55 bis 80°C bis zu einem Formaldehydgehalt von weniger als 0,5 % geführt (Verfahrensvariante B).

In einer weiteren Verfahrensvariante (C) ist es auch möglich, beide Reaktionsstufen zu verbinden. Dabei wird das Epoxidharz-Amin-Addukt gemeinsam mit der Aminkomponente mit dem gesamten vorgesehenen Phenol und der gesamten Formaldehydmenge versetzt und die Reaktionen bei 60 bis 75°C durchgeführt, bis die entsprechende Bindung des eingesetzten Formaldehyds erfolgt ist.

Gegebenenfalls kann das gemäß Hauptanspruch eingesetzte ein- oder mehrwertige Phenol und/oder Alkylphenol teilweise durch andere formaldehydreaktive Verbindungen ersetzt werden. So wurde gefunden, daß die Phenole teilweise durch Aminoverbindungen vom Typ des Harnstoffs, Thioharnstoffs, Melamins oder der Guanamine ersetzt werden können wodurch eine weitere Verbesserung der Löslichkeitscharakteristik erzielt wird.

Diese Variante ist dadurch gekennzeichnet,daß man 0,1 bis 0,4 Mol der eingesetzten Phenolverbindung durch formaldehyreaktive Aminoverbindungen vom Typ des Harnstoffs, Thioharnstoffs, Imidoharnstoffs, Melamins, Acetoguanamins oder Benzoguanamins oder Mischungen dieser Verbindungen ersetzt und in einer gemeinsamen Reaktionsstufe mit der sekundäre Aminogruppen aufweisenden Aminoverbindung und dem Formaldehyd umsetzt.

Durch diese Maßnahme wird neben einer Verbesserung der Löslichkeitscharakteristik auch die Haftfestigkeit des abgeschiedenen Films sowohl auf dem beschichteten Substrat als auch gegenüber der Folgeschicht verbessert.

Der Formaldehyd wird vorzugsweise als Paraformaldehyd in einer der handelsüblichen Formen mit einem effektiven Formaldehydgehalt von 80 bis 100 % eingesetzt. Als Formaldehydspender können zusätzlich auch Verbindungen Formaldehyd abgeben. Solche Verbindungen sind beispielsweise Oxazolidinverbindungen, welche z. B. in Form ihrer Carboxylderivate oder als Amine zur Modifikation des Epoxidharzes herangezogen werden.Der Formaldehyd wird in einer molaren Menge entsprechend 25 bis 90, vorzugsweise 30 bis 80 Mol-%, bzw. in der besonders bevorzugten Ausführungsform in einer Menge von 60 bis 80 Mol-%, bezogen auf die formaldehyreaktiven Stellen der Phenolkomponente eingesetzt. Zur Erzielung einer selbstvernetzenden Struktur ist es vorteilhaft, daß mindestens ein 30%iger molarer Überschuß an Formaldehyd gegenüber den vorhandenen NH-Gruppen zum Einsatz gelangt.

Zur Erzielung der Wasserverdünnbarkeit werden die basischen Gruppen des Reaktionsproduktes mit Säuren, vorzugsweise mit Ameisensäure, Essigsäure oder Milchsäure partiell oder vollständig neutralisiert. Für eine praxisgerechte Verdünnbarkeit genügt dafür üblicherweise eine Neutralisation von 10 - 40 % der basischen Gruppen oder eine Menge von ca.20 bis 60 Millimol Säure pro 100 g Festharz. Die Bindemittel werden dann mit deionisiertem Wasser auf die gewünschte Konzentration verdünnt; gegebenenfalls werden sie vor der Neutralisation oder vor der Verdünnung oder im teilverdünnten Zustand mit Pigmenten, Füllstoffen und anderen Zusatzstoffen zu pigmentierten Lacken verarbeitet.

Die Formulierung solcher Lacke sowie deren Verarbeitung im Elektrotauchlackierverfahren sind dem Fachmann bekannt und in der Literatur beschrieben. Die Härtung der abgeschiedenen Überzüge erfolgt beim Einsatz als Grundierung bei Temperaturen zwischen 150 und 180 Grad C während 10 bis 30 Minuten. Soferne die Bindemittel nicht in ausreichendem Maße selbstvernetzende Strukturen aufweisen, können auch zusätzliche Vernetzungsmittel, wie blockierte Isocyanate oder Aminoharze bzw. Phenolharze, mitverwendet werden. Die Produkte können bei entsprechender Formulierung auch durch andere Verfahren, wie Tauchen, Walzen oder Spritzen aufgebracht werden. Gegebenenfalls können die Bindemittel auch in organischen Lösungsmitteln verarbeitet werden.

Die nachstehenden Beispiele erläutern die Erfindung, ohne sie in ihrem Umfang zu beschränken. Alle Angaben in Teilen oder Prozenten beziehen sich, soferne nicht anderes angegeben ist, auf Gewichtseinheiten.

Die folgenden Abkürzungen werden in den Beispielen benützt:

| EPH I | Diepoxidharz auf Basis von Bisphenol A, Epoxidäquivalentgewicht ca. 190; |
| EPH II | Diepoxidharz auf Basis von Bisphenol A, Epoxidäquivalentgewicht ca. 475; |
| EPH III | Diepoxidharz auf Basis von Polypropylenglykol, Epoxidäquivalentgewicht ca. 320; |
| DEAPA | Diethylaminopropylamin |
| EHA | 2-Ethylhexylamin |
| NBA | n-Butylamin |
| HMDA | Hexamethylendiamin |
| DEA | Diethylamin |
| BPA | Bisphenol A |
| PH | Phenol, liquefactum 91 % |
| NPH | Nonylphenol |
| PTB | p-tert. Butylphenol |
| B 180 | flüssiges Polybutadienöl (ca. 75 % 1,4 cis-, ca. 24 % 1,4-trans- und ca. 1 % Vinyl-Doppelbindungen; Molekulargewicht ca. 1500 $\pm$ 15 %, Jodzahl ca. 450 g / 1000 g) |
| MSA | Maleinsäureanhydrid |
| CE | technisches Gemisch aus Glycidylestern der 1,1-Dimethyl-($C_7$ - $C_9$)-alkan-carbonsäuren |
| PF 91 | Paraformaldehyd 91 %ig |
| HMDA/BUAC | Umsetzungsprodukt aus HMDA und n-Butylacrylat (1 : 2 Mol) |
| HMDA/CE | Umsetzungsprodukt aus HMDA und CE (1 : 2 Mol) |
| EHX | 2-Ethylhexanol |
| EGL | Ethylenglykolmonoethylether |
| HEGL | Ethylenglykolmonohexylether |
| DPME | Dipropylenglykolmonomethylether |
| PME | Propylenglykolmonomethylether |
| DEGM | Diethylenglykoldimethylether |
| T | Toluol |
| TEX | 2,2,4-Trimethylpentan-1,3-diol-monoisobutyrat (Texanol) |

**Beispiele 1 bis 5**

Diese Beispiele betreffen die Umsetzung der Epoxidharz-Amin-Addukte mit Phenolen oder Alkylphenolen

**Herstellung der Epoxidharz-Amin-Addukte A 1 bis A 5**

Addukt A 1: In einem mit Thermometer, Rührer und Rückflußkühler ausgestatteten Reaktionsgefäß werden 190 Tle EPH I (1 Val) in 132 Tlen Toluol gelöst und auf 60 Grad C erwärmt. Anschließend wird eine Mischung von 59 Tlen DEAPA (0,45 Mol) und 58 Tlen EHA (0,45 Mol) langsam zugegeben, wobei die Reaktionstemperatur, gegebenenfalls unter Kühlung des Ansatzes, auf 75 bis 80 Grad C gehalten wird. Die Temperatur wird so lange gehalten, bis der Epoxidwert auf einen Wert von praktisch 0 gesunken ist. Die Adduktlösung kann unmittelbar weiterverarbeitet werden. Das Addukt enthält, bezogen auf Festharz, 0,8 Mol NH-Gruppen.

Addukt A 2: In gleicher Weise wie bei A 1 wird eine Lösung von 475 Tlen EPH II (1 Val) in 254 Tlen Toluol mit 59 Tlen DEAPA und 58 Tlen EHA (jeweils 0,45 Mol) umgesetzt. Das Produkt enthält 0,8 Mol NH-Gruppen (bezogen auf Festharz).

Addukt A 3: In gleicher Weise wie bei A 1 wird eine Lösung von 640 Tlen EPH III (2 Val) in 71 Tlen DEGM mit 117 Tlen DEAPA (0,9 Mol) und 66 Tlen NBA (0,9 Mol) umgesetzt. Das Produkt enthält 1,6 Mol NH-Gruppen in 823 g Festharz.

Addukt A 4: In gleicher Weise wie A 1 wird eine Lösung von 760 Tlen EPH I (4 Val) in 362 Tlen Toluol mit 260 Tlen DEAPA (2 Mol) und 114 Tlen HMDA (1 Mol) umgesetzt. Das Produkt enthält 4,0 Mol NH-Gruppen in 1134 g Festharz.

6

Addukt A 5: In gleicher Weise wie bei A 1 wird eine Lösung aus 190 Tlen EPH I (1 Val) in 47,5 Tlen Toluol mit 78 Tlen DEAPA (0,6 Mol) und 21 Tlen DEA (0,3 Mol als Modifikator) umgesetzt. Das Produkt enthält 0,5 Mol NH-Gruppen in 289 g Festharz.

**Beispiel 1:**

439 Tle A 1 (0,8 Mol NH) werden auf 60 Grad C erwärmt und nach Zugabe von 182 Tlen BPA (0,8 Mol) und 75,8 Tlen PF 91 (2,3 Mol $CH_2$), auf 80 Grad C erwärmt. Die Reaktionstemperatur wird unter Rühren bis zum Erreichen eines Formaldehydwertes von weninger als 0,3 % (bezogen auf eingesetzten Formaldehyd) gehalten. Das Reaktionsprodukt weist eine Aminzahl von 135 mg KOH/g auf.

Je nach der weiteren Verarbeitungsweise kannn das Produkt mit weiteren Hilfslösungsmittel bzw. Koalesziermittel, wie EGL bzw. HEGL oder TEX, verstetzt und in dieser Form oder nach Zusatz eines Teiles oder der ganzen zur protonisierung nötigen Säuremenge zur Herstellung der Farbpaste eingesetzt werden.

Für die Herstellung einer lösungsmittelarmen Form des Bindemittels wird das Harz mit der vorgesehenen Säuremenge versetzt und anschließend deionisiertes Wasser langsam unter Rühren zugegeben bis eine niedrigviskose Dispersion entstanden ist. Aus dieser wird bei 30 bis 60 Grad C ein Großteil des organischen Lösungsmittels durch Vakuumdestillation entfernt.

**Beispiele 2 - 5:**

Die Ansätze, Reaktionsbedingungen und Kennzahlen sind in der Tabelle 1 zusammengefaßt. Die Herstellung erfolgt in der im Beispiel 1 angegebenen Weise.

**Tabelle 1**

| Beispiel | 2 | 3 | 4 | 5 |
|---|---|---|---|---|
| Aminaddukt | A 2 | A 3 | A 4 | A 5 |
| Tle Lösung, | 846 | 864 | 1460 | 336,5 |
| entsprechend Tle Festharz | 592 | 823 | 1134 | 289 |
| enthaltend Mol NH-Gruppe | 0,8 | 1,6 | 4,0 | 0,5 |
| Phenolkomponente | BPA | BPA | PH | BPA |
| Teile (100 %ig) | 160 | 365 | 315 | 96 |
| entsprechend Mol | 0,7 | 1,6 | 3,5 | 0,42 |
| Mol Phenol / NH | 0,88 | 1,0 | 0,68 | 0,84 |
| PF 91 | | | | |
| Teile ($CH_2O$, 100 %) | 60 | 144 | 210 | 38 |
| Mol | 2,0 | 4,8 | 7,0 | 1,25 |
| Reaktionstemperatur Grad C | 75 | 80 | 60 | 70 |
| Aminzahl mg KOH/g | 93 | 114 | 203 | 199 |

**Beispiel 6:**

700 Tle B 180 werden in bekannter Weise in Gegenwart von 0,05 Tlen Diphenylparaphenylendiamin (Inhibitor) bei 200°C mit 100 Tlen MSA solange reagiert, bis das MSA vollständig gebunden ist. Nach Kühlen auf 100°C werden 130 Tle EHX zugesetzt und bei 120°C bis zum Erreichen der theoretischen Säurezahl des Halbesters verestert (MAD A).

110 Tle MAD A (entsprechend ca. 0,12 COOH-Gruppen) werden mit 212 Tlen EPH I in 80 %iger Lösung in DGME bei 120°C bis zu einer Säurezahl von praktisch Null umgesetzt.

Nach Zusatz von 106 Tlen DGME, 59 Tlen DEAPA (0,45 Mol) und- 59 Tlen EHA (0,45 Mol) wird der Ansatz bei 65 - 70°C bis zu einem Epoxidwert von praktisch 0 reagiert. Nach Erreichen dieses Wertes werden 114 Tle BPA (0,5 Mol) und 50 Tle PF (1,5 Mol) zugegeben und die Reaktion bei 60°C bis zum Erreichen eines Gehaltes an freiem Formaldehyd von 0,5 - 1 % geführt. Nach Zusatz von 130 Tlen DGME wird der Ansatz mit 35 Millimol Ameisensäure /100 g Festharz neutralisiert und anschließend durch portionsweise Zugabe von deionisiertem Wasser verdünnt. Der Festkörpergehalt der opaken Dispersion beträgt 35 %.

**Beispiel 7:**

930 Tle MAD A werden mit 125 Tlen CE (= 0,5 Mol) bei 120°C bis zu einer Säurezahl von 30 mg KOH/g umgesetzt (MAD B).

317 Tle MAD B werden mit 219 Tlen EPH 1 in 80 %iger Lösung in PME bei 120°C bis zu einer Säurezahl von praktisch 0 umgesetzt.

Nach Zusatz von 146 Tlen PME, 59 Tlen DEAPA (0,45 Mol) und 29 Tlen (0,4 Mol) NBA wird der Ansatz bei 65-70°C bis zu einem Epoxidwert von praktisch 0 reagiert. Nach Erreichen dieses Wertes werden 114 Tle BPA (0,5 Mol), 21 Tle PH (0,2 Mol) sowie 66 Tle PF 91 (2,0 Mol) zugegeben und die Reaktion bei 60°C bis zum Erreichen eines Gehaltes an freiem Formaldehyd unter 0,5 % geführt. Nach Zusatz von 160 Tlen PME wird der Ansatz mit 40 Millimol Ameisensäure / 100 g Festharz neutralisiert und anschließend durch portionsweise Zugabe von deionisiertem Wasser auf einen Festkörpergehalt von 40 % verdünnt.

**Beispiele 6 bis 13:**

Diese Beispiele betreffen die Umsetzung der Epoxidharz-Amin-Addukte unter Verwendung von Aminoalkylierungsprodukten von monosubstituierten Phenolen.

**Herstellung der aminoalkylierten Phenole MVP 1 - 5:**

In einem mit Wasserabscheider, Kühler, Thermometer und Rühreinrichtung ausgestatteten Reaktionsgefäß wird das Amin und das Phenol auf 70°C erwärmt und der Paraformaldehyd portionsweise zugesetzt, wobei die Temperatur durch die auftretende Exothermie nicht über 80°C ansteigen soll. Die Abtrennung des gebildeten Reaktionswassers erfolgt mit Hilfe eines Schleppmittel mit einem Siedebereich von 80 - 130°C (z. B. einem entsprechenden Spezialbenzin). Die Reaktion wird solange geführt, bis die entsprechende Menge Reaktionswasser abgeschieden wurde. Nach Abziehen des Schleppmittels im Vakuum wird das Produkt mit DEGM verdünnt. Die Zusammensetzung der Vorprodukte MVP 1 - 5 ist in der folgenden Tabelle angegeben.

| MVP | 1 | 2 | 3 | 4 | 5 |
|---|---|---|---|---|---|
| DEAPA | 130 | - | - | - | - |
| HMDA | - | 116 | - | - | - |
| EHA | - | - | 129 | - | - |
| HMDA/ BUAC | - | - | - | 368 | - |
| HMDA/CE | - | - | - | - | 616 |
| NPH | 440 | 880 | - | 220 | 220 |
| PTB | - | - | 300 | - | - |
| BPA | - | - | - | 228 | 228 |
| PF 91 | 66 | 132 | 66 | 66 | 66 |
| verdünnt mit DGME (% Festkörpergehalt) | 80 | 80 | 80 | 85 | 80 |

**Herstellung der Epoxidharz-Amin-Addukte**

Addukt A 6: 700 Tle B 180 werden in bekannter Weise in Gegenwart von 0,05 Tlen Diphenylparaphenylendiamin (Inhibitor) bei 200°C mit 100 Tlen MSA so lange reagiert, bis das MSA vollständig gebunden ist. Nach Kühlen auf 100°C werden 130 Tle EHX zugesetzt und bei 120°C bis zum Erreichen der theoretischen Säurezahl des Halbesters verestert (MAD A). 110 Tle MAD A (entsprechend ca. 0,12 COOH-Gruppen) werden mit 212 Tlen EpH I in 80 %iger Lösung in DEGM bei 120°C bis zu einer Säurezahl von praktisch Null umgesetzt. Nach Zusatz von 108 Tlen DEGM, 59 Tlen DEAPA (0,45 Mol) und 59 Tlen EHA (0,45 Mol) wird der Ansatz bei 65 - 70°C bis zu einem Epoxidwert von praktisch Null reagiert.

Addukt A 7: In einem mit Thermometer, Rührer und Rückflußkühler ausgestatteten Reaktionsgefäß werden 190 Tle EPH I (1 Val) in 132 Tlen DEGM gelöst und auf 60°C erwärmt. Anschließend wird eine Mischung von 59 Tlen DEAPA (0,45 Mol) und 58 Tlen EHA (0,45 Mol) langsam zugegeben, wobei die Reaktionstemperatur,

**0 158 128**

gegebenenfalls unter Kühlung des Ansatzes, auf 75 bis 80°C gehalten wird. Die Temperatur wird so lange gehalten, bis der Epoxidwert auf einen Wert von praktisch Null gesunken ist. Die Adduktlösung kann unmittelbar weiterverarbeitet werden. Das Addukt enthält, bezogen auf Festharz, 0,8 Mol NH-Gruppen.

Addukt A 8: 475 Tle EPH II (1 Epoxidval) werden in 254 Tlen DEGM gelöst und bei 70 bis 75°C mit 59 Tlen DEAPA (0,45 Mol) und 58 Tlen EHA (0,45 Mol) bis zu einem Epoxidwert von 0 umgesetzt. Das Addukt enthält, bezogen auf Festharz, 0,8 Mol NH-Gruppen.

Beispiel 8: In einem mit Thermometer, Rührer und Rückflußkühler ausgestatteten Reaktionsgefäß werden 628 Tle Addukt A 6 (entsprechend 0,8 Mol NH-Gruppen) bei 80°C mit 114 Tlen BPA (0,5 Mol), 149 Tlen MVP 1 (60 %ig; 0,2 Mol) und 76 Tlen PF 91 (2,3 Mol) umgesetzt, bis der Gehalt an freiem Formaldehyd auf 0,5 - 1 % (bezogen auf eingesetzten Formaldehyd) gefallen ist. Der Ansatz wird mit 170 Tlen PME verdünnt und mit 35 mMol Ameisensäure pro 100 g Festharz neutralisiert. Nach einer Homogenisierungszeit von etwa 1 Stunde werden 975 Tle deionisiertes Wasser unter kräftigem Rühren langsam zugegeben. Die entstehende Dispersion hat einen Festkörpergehalt von ca. 35 %.

Produkte mit weitgehend gleichen Eigenschaften werden auch nach der Verfahrensvariante (B) im "Eintopfverfahren" erhalten:

Dabei werden 628 Tle Addukt A 6 bei 90°C mit 88 Tlen NPH (0,4 Mol), 26 Tlen DEAPA (0,2 Mol), 13 Tlen PF 91 (0,4 Mol) und 30 Tlen DEGM versetzt und diese Temperatur 1 Stunde gehalten. Nach Zugabe von 114 Tlen BPA (0,5 Mol) und 76 Tlen PF 91 (2,3 Mol) wird die Temperatur auf 70°C eingestellt und so lange gehalten, bis der Gehalt an freiem Formaldehyd unter 0,5 % gesunken ist. Die weitere Verarbeitung erfolgt wie oben für das Beispiel 8 angegeben.

Beispiel 9: Wie in Beispiel 6 beschrieben, werden 439 Tle Addukt A 7 (entsprechend 0,8 Mol NH-Gruppen) nach Zugabe von 130 Tlen DEGM bei 65°C mit 91 Tlen BPA (0,4 Mol), 392 Tlen MVP 2 (80 %ig; 0,3 Mol) und 66 Tlen PF 91 (2 Mol) umgesetzt, bis der Gehalt an freiem Formaldehyd unter 0,5 % gefallen ist. Nach Zusatz von 192 Tlen PME und 35 mMol Ameisensäure pro 100 g Festharz wird durch langsame Zugabe von deionisiertem Wasser eine 40 %ige Dispersion hergestellt.

Beispiel 10: Wie in Beispiel 6 beschrieben, werden 439 Tle Addukt A 7 (entsprechend 0,8 Mol NH-Gruppen) nach Zugabe von 130 Tlen DEGM bei 65°C mit 396 Tlen MVP 3 (80 %ig; 0,7 Mol) und 43 Tlen PF 91 (1,3 Mol) umgesetzt, bis der Gehalt an freiem Formaldehyd auf 0,5 - 1 % gefallen ist. Nach Zugabe von 36 Tlen PME und 30 mMol Ameisensäure pro 100 g Festharz wird durch portionsweise Zugabe von deionisiertem Wasser eine 36 %ige Dispersion hergestellt.

Beispiel 11: Wie in Beispiel 6 beschrieben, werden 628 Tle Addukt A 6 (entsprechend 0,8 Mol NH-Gruppen) bei 60°C mit 91 Tlen Bisphenol A (0,4 Mol), 296 Tlen MVP 4 (85 %ig; 0,3 Mol) und 66 Tlen PF 91 (2 Mol) umgesetzt, bis der Gehalt an freiem Formaldehyd unter 0,5 % gefallen ist. Nach Zugabe von 122 Tlen PME und 30 mMol Ameisensäure pro 100 g Festharz wird durch langsame Zugabe von deionisiertem Wasser eine 36 %ige Dispersion hergestellt.

Aus den gleichen Rohstoffen kann ein weitgehend gleiches Endprodukt auch nach dem "Eintopfverfahren" gemäß Verfahrensvariante (C) erhalten werden.

Dazu werden 628 Tle Addukt A 6 mit 44 Tlen DEGM verdünnt und nach Zugabe von 110 Tlen HMDA/BUAC, 66 Tlen NPH (0,3 Mol), 159 Tlen BPA (0,7 Mol) und 86 Tlen PF 91 (2,6 Mol) bei 65°C reagiert, bis der Gehalt an freiem Formaldehyd unter 0,5 % gesunken ist. Die weitere Verarbeitung erfolgt in der oben für das Beispiel 9 angegebenen Weise.

Beispiel 12: Wie im Beispiel 6 beschrieben, werden 846 Tle Addukt A 8 (entsprechend 0,8 Mol NH-Gruppen) nach Zugabe von 88 Tlen DEGM bei 65°C mit 680 Tlen MVP 5 (80 %ig; 0,5 Mol), 68 Tlen BPA (0,3 Mol) und 79 Tlen PF 91 (2,4 Mol) umgesetzt, bis der Gehalt an freiem Formaldehyd unter 0,5 % (bezogen auf eingesetzten Formaldehyd) gesunken ist. Nach Zugabe von 35 mMol Ameisensäure pro 100 g Festharz wird durch langsame Zugabe von deionisiertem Wasser eine 36 %ige Dispersion hergestellt.

Beispiel 13: In der im Beispiel 8 beschriebenen Apparatur werden in Gegenwart von 628 Tlen Addukt A 6 (enthaltend 0,8 Mol NH-Gruppen) bei 70 bis 75°C 23 Tle HMDA mit 51 Tlen BUAC 1 Stunde reagiert. Nach Zugabe von 160 Tlen BPA (0,7 Mol), 44 Tlen NPH (0,2 Mol) und 33 Tlen PF 91 (1 Mol entsprechend 31 Mol-% bezogen auf formaldehydreaktive Stellen) wird der Ansatz bei 60 bis 65°C gehalten bis der Gehalt an freiem Formaldehyd auf praktisch 0 gesunken ist. Nach Zugabe von 40 Millimol Ameisensäure/ 100 g Festharz wird eine 40 %ige wäßrige Dispersion hergestellt.

Beispiele 14 und 15: Diese Beispiele beschreiben den teilweisen Ersatz der Phenole durch Harnstoff bzw. Melamin.

Beispiel 14: In einem mit Thermometer, Rührer und Rückflußkühler ausgestattetem Reaktionsgefäß werden 1064 Tle (5,6 Val) EPH I in 694 Tlen DPME gelöst und bei 65 bis 70°C mit 116 Tlen HMDA (1 Mol), 364 Tlen DEAPA (2,8 Mol) und 103 Tlen EHA (0,8 Mol) bis zu einem Epoxidwert von 0 umgesetzt. Das Addukt enthält 5,6 Mol sekundäre NH-Gruppen.

Nach Zugabe von weiteren 160 Tlen DPME werden 550 Tle NPH (2,5 Mol), 84 Tle einer 50 %igen wäßrigen Harnstofflösung (entsprechend 0,7 Mol Harnstoff), 251 Tle BPA (1,1 Mol) und 254 Tle PF 91 (7,7 Mol) zugegeben und der Ansatz bei 60°C gerührt, bis der Gehalt an freiem Formaldehyd (bezogen auf eingesetzten Formaldehyd) unter 1 % liegt.

Zur Herstellung einer Dispersion wird der Ansatz mit 272 Tlen (entsprechend 30 mMol/100 g Festharz) einer 3 n-Ameisensäure versetzt und mit deionisiertem Wasser langsam auf einen Festkörpergehalt von 40 % verdünnt.

9

Beispiel 15: In der oben beschriebenen Apparatur werden 760 Tle EPH I (4,0 Val) in 490 Tlen DPME gelöst und mit 116 Tlen HMDA (1 Mol) und 260 Tlen DEAPA (2 Mol) bei 65 bis 70°C bis zu einem Epoxidwert von 0 reagiert. Das Addukt enthält 4 Mol sekundäre Aminogruppen.

Nach Zugabe von weiteren 350 Tlen DPME wird der Ansatz mit 594 Tlen NPH (2,7 Mol) und 63 Tlen Melamin (0,5 Mol) versetzt und bei 55 bis 60°C gerührt, bis der Gehalt an freiem Formaldehyd (bezogen auf eingesetztem Formaldehyd) auf unter 1 % gefallen ist. Nach Zugabe von 161 Tlen (entsprechend 25 mMol/100 g Festharz) einer 3 n-Ameisensäure wird in der im Beispiel 1 angegebenen Weise eine 35 %ige Dispersion hergestellt.

## Prüfung der erfindungsgemäß hergestellten Bindemittel

Wie angegeben werden aus den erfindungsgemäß hergestellten Produkten lösungsmittelarme Dispersionen hergestellt. Der Säurebedarf, der resultierende Neutralisationsgrad, der Festkörpergehalt der Dispersionen sowie die Einbrennverluste (Bestimmung siehe unten) sind im folgenden zusammengefaßt.

| Bei-spiel | Säurebedarfr+) mMol/100 g Festharz | Neutra-lisations-grad% | Festkör-pergehalt d.Dispersion | Einbrenn-verlust % bei °C++) |
|---|---|---|---|---|
| 1 | 50 | 20,7 | 38 | 3,2/160 |
| 2 | 55 | 33,1 | 47 | 2,8/150 |
| 3 | 20 | 9,8 | 40 | 5,6/180 |
| 4 | 40 | 11,0 | 35 | 2,5/140 |
| 5 | 60 | 16,9 | 36 | 4,3/180 |
| 6 | 35 | 15,9 | 35 | 4,2/160 |
| 7 | 40 | 18,4 | 40 | 7,8/170 |
| 8 | 35 | 14,8 | 35 | 4,8/150 |
| 9 | 35 | 13,8 | 40 | 7,1/170 |
| 10 | 30 | 9,7 | 36 | 9,8/180 |
| 11 | 30 | 13,0 | 36 | 4,3/160 |
| 12 | 35 | 19,2 | 36 | 5,2/170 |
| 13 | 40 | 17,9 | 40 | 8,9/160 |
| 14 | 30 | 9,7 | 40 | 8,3/170 |
| 15 | 25 | 8,1 | 35 | 11,7/180 |

+) Ameisensäure (oder Essigsäure)

++) Zur Bestimmung des Einbrennverlustes wird die Dispersion mit deionisiertem Wasser auf 10 % Festkörpergehalt verdünnt und daraus entfettete Stahlbleche unter Bedingungen, welche eine Trockenfilmstärke von 18 ± 2 µm ergeben, kathodisch beschichtet. Das Blech wird 30 Minuten bei 110 Grad C vorgetrocknet, gewogen und 30 Minuten bei der angegebenen Temperatur eingebrannt. Der Einbrennverlust wird durch Wägung bestimmt. Die angegebenen Einbrenntemperaturen ergeben eine ausreichende Vernetzung, welche durch eine Lösungsfestigkeit von mehr als 100 Doppelhüben mit Methylisobutylketon charakterisiert ist. Die analogen Einbrennbedingungen werden auch bei den Beständigkeitsprüfungen angewandt.

Zur Feststellung der Beständigkeitseigenschaften werden für die Beispiele 1 bis 7, 14 und 15 pigmentierte Lacke gemäß den folgenden Rezepturen hergestellt. Die Lacke fur die Beispiele 6 bis 13 wurden ohne hochsiedende Lösungsmittel (Koalesziermittel) formuliert. Trotzdem wurden in allen Fällen einwandfreie Oberflächen erhalten.

| Bindemittel aus Beispiel | 1 | 2 | 3 | 4 | 5 | 6 | 7 |
|---|---|---|---|---|---|---|---|
| Farbpaste(1) (I) | 83 | - | 83 | 83 | - | 83 | 83 |
| Farbpaste II | - | 91 | - | - | 91 | - | - |
| Erfgem.Bindemittel | 197 | 149 | 188 | 214 | 208 | 214 | 188 (Dispersion) |
| Koaleszermittel | 12 | 10 | - | 8 | 14 | - | - |
| | TEX | TEX | HEGL | TEX | | Wasser | |
| | 486 | 528 | 507 | 473 | 465 | 481 | 507 |
| Pastenharz/ Dispersion | 25/75 | 30/70 | 25/75 | 25/75 | 30/70 | 25/75 | 25/75 (fest/fest) |

| Bindemittel aus Beispiel | 8 | 9 | 10 | 11 | 12 | 13 | 14 | 15 |
|---|---|---|---|---|---|---|---|---|
| Farbpaste(1) (I) | - | 83 | 83 | 83 | - | - | 83 | 83 |
| Farbpaste II | 91 | - | - | - | 91 | 91 | - | - |
| Erfgem.Bindemittel (Dispersion) | 200 | 188 | 208 | 208 | 194 | 188 | 188 | 214 |
| Koaleszermittel | - | - | - | - | - | - | - | - |
| Wasser | 487 | 507 | 487 | 487 | 493 | 499 | 507 | 481 |
| Pastenharz/ Dispersion (fest/fest) | 30/70 | 25/75 | 25/75 | 25/75 | 30/70 | 30/70 | 25/75 | 25/75 |

(1) Die Farbpaste basiert auf einem Anreibeharz auf Basis eines oxazolidinmodifizierten Epoxidharzes gemäß EP-A3-00 76 955.

| Farbpaste | (I) Tle | (II) Tle | |
|---|---|---|---|
| | 100 | 100 | Anreibeharz (100 %) |
| | 1 | 0,8 | Farbruß |
| | 12 | 10 | basisches Bleisilikat |
| | 147 | 122,5 | Titandioxid |

Die Herstellung des Anreibeharzes erfolgt in folgender Weise: 500 Tle eines Epoxidharzes auf Basis von Bisphenol A (Epoxidäquivalentgewicht ca. 500) werden in 214 Tlen PME gelöst und bei 110 Grad C mit 83 Tlen eines Halbesters aus Phthalsäureanhydrid und EHX in Gegenwart von 0,5 g Triethylamin als Katalysator bis zu einer Säurezahl von weniger als 3 mg KOH/g reagiert. Dann werden 120 Tle eines NH-funktionellen Oxazolidins aus Aminoethylethanolamin, 2-Ethylhexylacrylat und Formaldehyd, sowie 26 Tle DEAPA zugefügt und der Ansatz bei 80 Grad C bis zu einem Epoxidwert von praktisch 0 reagiert. Der Ansatz wird mit 200 Tlen Propylenglykolmonomethylether verdünnt und mit 97 Tlen 3-normaler Ameisensäure partiell neutralisiert. Der resultierende Festkörpergehalt beträgt 58,8 %.

Die Lacke wurden nach Verdünnung auf einen Festkörpergehalt von 18 % unter Bedingungen, welche eine Trockenfilmstärke von 20 ± 2 µm ergeben, auf zinkphosphatiertes Stahlblech kathodisch abgeschieden und bei der bei der Bestimmung des Einbrennverlustes angegebenen Einbrenntemperatur 30 Minuten eingebrannt. In allen Fällen wird beim Salzsprühtest gemäß ASTM B-117-64 nach einer Prüfdauer von 700 Stunden ein Angriff am Kreuzschnitt von weniger als 2 mm festgestellt. Beim Feuchtschranktest (100 % relative Luftfeuchtigkeit bei 50 Grad C) sind die Beschichtungen nach 500 Stunden in einwandfreiem Zustand.

## Patentansprüche

1. Verfahren zur Herstellung von kathodisch abscheidbaren Elektrotauchlack-Bindemitteln auf der Basis von durch Umsetzung mit Phenol-Formaldehyd-Kondensaten oder Amin-Formaldehyd-Kondensaten modifizierten Epoxidharzen, dadurch gekennzeichnet, daß man ein Epoxidharz, welches mindestens 2 Epoxidgruppen und ein Epoxidäquivalentgewicht von 180 bis 1000 aufweist, mit

0,6 bis 1,0 Mol primäre Aminogruppen pro verfügbarer Epoxidgruppe eines primären Monoalkylamins und/oder eines primären Alkylendiamins und/ oder eines primär-tertiären Alkylendiamins und

0 bis 0,4 Mol pro verfügbarer Epoxidgruppe einer Carboxylverbindung oder eines sekundären Amines bei 50 bis 120 Grad C bis zu einem Epoxidwert von praktisch Null umsetzt und das resultierende Epoxidharz-Amin-Addukt mit, bezogen auf 1 Mol NH-Gruppen,

0,5 bis 1 Mol eines ein- oder mehrkernigen Phenols und/oder Alkylphenols und/oder eines Aminoalkylierungsproduktes von monosubstituierten ein- oder zweikernigen Phenolen oder gegebenenfalls anteilig einer formaldehydreaktiven Verbindung vom Typ des Harnstoffs, des Melamins oder des Guanamins und mit

0,25 bis 0,9, vorzugsweise 0,6 bis 0,8 Mol Formaldehyd pro formaldehydreaktiver Stelle bei 50 bis 90 Grad C bis zu einer weitgehenden Bindung des Formaldehyds umsetzt und das Reaktionsprodukt nach partieller oder vollständiger Neutralisation mit Säuren und gegebenenfalls nach Zusatz wasserverträglicher organischer Lösungsmittel mit Wasser verdünnt.

2. Verfahren nach Anspruch 1, dadurch gekennzeichnet, daß Epoxidharze auf Basis von Bisphenol A und/oder Phenolnovolaken eingesetzt werden.

3. Verfahren nach Anspruch 1 und 2, dadurch gekennzeichnet, daß primäre Monoalkylamine mit mindestens 4 Kohlenstoffatomen eingesetzt werden.

4. Verfahren nach den Ansprüchen 1 bis 3, dadurch gekennzeichnet, daß Mischungen aus Monoalkylaminen und/oder Alkylendiaminen mit Dialkylaminoalkylaminen eingesetzt werden.

5. Verfahren nach den Ansprüchen 1 bis 4, dadurch gekennzeichnet, daß die Umsetzung der Epoxidgruppen mit den Aminen bei 50 bis 90 Grad C erfolgt.

6. Verfahren nach den Ansprüchen 1 bis 4, dadurch gekennzeichnet, daß die Umsetzung der Epoxidgruppen mit den Carboxylverbindungen bei 90 bis 120 Grad C erfolgt.

7. Verfahren nach Anspruch 6, dadurch gekennzeichnet, daß man als Carboxylverbindungen Monocarbonsäuren mit 7 bis 20 C-Atomen einsetzt.

8. Verfahren nach den Ansprüchen 6 und 7, dadurch gekennzeichnet, daß man als Monocarboxylverbindungen Halbester von Dicarbonsäuren mit Monoalkoholen oder Oxazolidinverbindungen einsetzt.

9. Verfahren nach Anspruch 6, dadurch gekennzeichnet, daß man als Carboxylverbindungen Anlagerungsverbindungen von Maleinsäureanhydrid an ungesättigte Öle und/oder hydroxylfreie Ester der in diesen Ölen enthaltenen Fettsäuren oder der Tallölfettsäuren mit Polyolen und/oder niedermolekulare ungesättigte Kohlenwasserstoffpolymere oder -oligomere, vorzugsweise Dienpolymere mit Molekulargewichten zwischen etwa 400 und etwa 3000, deren Anhydridgruppen mit Monohydroxylverbindungen unter Halbesterbildung geöffnet wurden, einsetzt.

10. Verfahren nach Anspruch 9, dadurch gekennzeichnet, daß die Carboxylverbindungen eine Säurezahl von 30 - 130, vorzugsweise 35 - 80 mg KOH/g aufweisen.

11. Verfahren nach den Ansprüchen 9 und 10, dadurch gekennzeichnet, daß die Anzahl der Carboxylgruppen der Halbester durch Umsetzung mit Monoepoxidverbindungen vermindert wird.

12. Verfahren nach den Ansprüchen 1 bis 11, dadurch gekennzeichnet, daß Phenole mit mindestens 2 formaldehydreaktiven Stellen, vorzugsweise Bisphenol A eingesetzt wird.

13. Verfahren nach den Ansprüchen 1 bis 12, dadurch gekennzeichnet, daß man 0,1 bis 0,4 Mol der eingesetzten Phenolverbindung durch formaldehydreaktive Aminoverbindungen vom Typ des Harnstoffs, Thioharnstoffs, Imidoharnstoffs, Melamins, Acetoguanamins oder Benzoguanamins oder Mischungen dieser Verbindungen ersetzt und in einer gemeinsamen Reaktionsstufe mit der sekundären Aminogruppen aufweisenden Aminoverbindung und dem Formaldehyd umsetzt.

14. Verfahren nach den Ansprüchen 1 bis 13, dadurch gekennzeichnet, daß man das ein- oder mehrkernige Phenol und/oder Alkylphenol ganz oder teilweise durch Aminoalkylierungsprodukte von monosubstituierten ein- oder zweikernigen Phenolen ersetzt, wobei der Substituent ein Alkylrest mit mindestens 4 C-Atomen - oder ein Aralkylrest ist und das Amin mindestens 2 Aminowasserstoffe und mindestens 4 C-Atome aufweist.

15. Verfahren nach Anspruch 14, dadurch gekennzeichnet, daß man als Phenole Alkylphenole mit $C_8$- oder $C_9$-Alkylresten und/oder Bisphenol A einsetzt.

16. Verfahren nach den Ansprüchen 14 und 15, dadurch gekennzeichnet, daß man als Amine zur Aminoalkylierung Umsetzungsprodukte aus 1 Mol eines aliphatischen primären Diamins, vorzugsweise Hexamethylendiamin, und 2 Mol eines Acrylesters, vorzugsweise eines Butylacrylates, 2-Ethylhexylacrylates oder einer Monoepoxidverbindung, vorzugsweise der Glycidylester von KOCH-Säuren, einsetzt.

17. Verfahren nach den Ansprüchen 14 bis 16, dadurch gekennzeichnet, daß man die Aminoalkylierung der Phenole in Gegenwart des Epoxidharz-Amin-Adduktes durchführt.

18. Verfahren nach den Ansprüchen 16 und 17, dadurch gekennzeichnet, daß man die Aminoalkylierung der Phenole und die Umsetzung der Phenole bzw. des Formaldehydes mit dem Epoxidharz-Amin-Addukt in einer Verfahrensstufe durchführt.

19. Verfahren nach den Ansprüchen 1 bis 18, dadurch gekennzeichnet, daß zur Erzielung einer selbstvernetzenden Struktur der Bindemittel ein gegenüber den vorhandenen NH-Gruppen 30 %iger molarer Überschuß an Formaldehyd eingesetzt wird.

20. Verfahren nach den Ansprüchen 1 bis 19, dadurch gekennzeichnet, daß das organische Hilfslösungsmittel aus dem nach Neutralisation mit Säure mit Wasser verdünnten Reaktionsprodukt zumindest teilweise durch

12

**0 158 128**

Vakuumdestillation bei 30 bis 60 Grad C entfernt wird.

21. Verfahren nach den Ansprüchen 1 bis 20, dadurch gekennzeichnet, daß die Pigmentierung der Bindemittel mit Hilfe eines pigmentierten Pasten-(Anreibe-)Harzes erfolgt.

22. Verwendung der entsprechend einem Verfahren gemäß den Ansprüchen 1 bis 21 hergestellten kationischen Bindemittel zur Formulierung von kathodisch abscheidbaren Elektrotauchlacken.


**Claims**

1. Process for producing cathodically depositable electrode-position paint binders on the basis of epoxy resins modified through reaction with phenol formaldehyde condensates or amine-formaldehyde condensates characterised in that an epoxy resin with at least 2 epoxy groups and an epoxy equivalent weight of 180 to 1000, is reacted at 50 to 120°C with

120°C with

0.6 to 1.0 moles of primary amino groups per each available epoxy group of a primary monoalkyl amine and/or a primary alkylene diamine and/or a primary/tertiary alkylene diamine, and

0 to 0.4 moles per available epoxy group of a carboxylic compound or a secondary amine to an epoxy value of practically 0, and the resulting epoxy resinamin -adduct is reacted, at 50 to 90°C, calculated on 1 mole of NH-groups, with

0.5 to 1.0 moles of a mono- or polynuclear phenol and/or alkyl phenol and/or aminoalkylation product of a monosubstituted mono- or dinuclear phenol, or optionally, in portions, with a formaldehyde-reactive compound of the type of urea, melamine or guanamine, and with

0.25 to 0.9, preferably 0.6 to 0.8 moles of formaldehyde per formaldehyde-reactive site, until the formaldehyde is substantially bound and the reaction product, upon partial or total neutralisation with acids and, optionally after addition of water tolerant organic solvents, is diluted with water.

2. Process according to claim 1, characterised in that epoxy resins based on bisphenol A and/or phenol novolaks are used.

3. Process according to claims 1 and 2, characterised in that primary monoalkylamines with at least 4 carbon atoms are used.

4. Process according to claims 1 to 3, characterised in that blends of monoalkylamines and/or alkylene diamines with dialkylaminoalkylamines are used.

5. Process according to claims 1 to 4, characterised in that the reaction of the epoxy groups with the amines is carried out at 50 to 90°C.

6. Process according to claims 1 to 4, characterised in that the reaction of the epoxy groups with the carboxylic compounds is carried out at from 90 to 120°C.

7. Process according to claim 6, characterised in that monocarboxylic acids with 7 to 20 carbon atomes are used as monocarboxylic acids.

8. Process according to claims 6 and 7, characterised in that semiesters of dicarboxylic acids with monoalcohols or oxazolidine compounds are used as monocarboxylic compounds.

9. Process according to claim 6, characterised in that as carboxylic compounds addition products of maleic acid anhydride to unsaturated oils and/or hydroxy-free esters of the oil fatty acids contained in these oils or tall oil fatty acids with polyols and/or low molecular unsaturated hydrocarbon polymers or oligomers, preferably diene polymers with molecular weights of between about 400 and about 3000 are used, the anhydride groups of which have been opened through semiester formation with monohydroxy compounds.

10. Process according to claim 9, characterised in that the carboxyl compounds have an acid value of from 30 to 130, preferably 35 to 80 mg KOH/g.

11. process according to claims 9 and 10, characterised in that the number of carboxy groups of the semiesters is reduced through reaction with monoepoxy compounds.

12. Process according to claims 1 to 11, characterised in that phenols with at least 2 formaldehyde-reactive sites, preferably bisphenol A, are used.

13. Process according to claims 1 to 12, characterised in that 0.1 to 0.4 moles of the used phenolic compound are replaced by formaldehyde-reactive compounds of the type of urea, thiourea, imidourea, melamine, acetoguanamine or benzoguanamine or mixtures of these compounds and that they are reacted in a joint reaction step with the secondary amino group containing amino compound and formaldehyde.

14. Process according to claims 1 to 13, characterised in that the mono-or polynuclear phenol and/or alkyl phenol is replaced partly or totally by aminoalkylation products of mono-substituted mono- or dinuclear phenols, the substituent being an alkyl radical with at least 4 carbon atoms or an aralkyl radical, and the amine carrying at least 2 amino hydrogen groups and at least 4 carbon atoms.

15. Process according to claim 14, characterised in that alkylphenols with $C_8$- or $C_9$ - alkyl radicals and/or bisphenol A are used as phenols.

16. Process according to claims 14 and 15, characterised in that as amines for aminoalkylation reaction products are used of 1 mole of an aliphatic primary diamine, preferably hexamethylenediamine, and 2 moles of an acrylic ester, preferably a butyl acrylate, 2-ethylhexylacrylate or a monoepoxy compound, preferably the glycidyl ester of KOCH-acids.

13

17. Process according to claims 14 to 16, characterised in that the aminoalkylation of the phenols is carried out in the presence of the epoxy resin-amino-adduct.

18. Process according to claims 16 and 17, characterised in that the aminoalkylation of the phenols and the reaction of the phenols and of the formaldehyde with the epoxy resin-amino-adduct are carried out in one reaction step.

19. Process according to claims 1 to 18, characterised in that for obtaining a self-crosslinking structure of the binders a molar excess of 30 % of formaldehyde over the NH-groups present is used.

20. Process according to claims 1 to 19, characterised in that the auxiliary organic solvent, after neutralisation with acids and dilution with water is at least partly vacuumstripped from the reaction product at from 30 to 60°C.

21. Process according to claims 1 to 20, characterised in that the pigmentation of the binders is effected with the aid of a pigmented mill(base)resin.

22. Use of the cathodically depositable electrodeposition binders produced according to the process set forth in claims 1 to 21 in the formulation of cathodically depositable electrodeposition paints.


## Revendications

1. Procédé destiné à la préparation de liants pour peintures cathodiquement électrodéposables à base de résines époxy modifiées par réaction avec des condensats de phénol-formaldéhyde ou des condensats d'amine-formaldéhyde,

caractérisé en ce que l'on fait réagir une résine époxy comportant au moins deux groupes époxyde et un poids d'équivalent époxy de 180 à 1000, avec

0,6 à 1,0 mole de groupes amino primaires par groupe époxyde disponible d'une monoalkyalmine primaire et/ou d'une alcoylène-diamine primaire et/ou d'une alcoylène-diamine primaire-tertiaire et

0 à 0,4 mole par groupe époxyde disponible d'un composé carboxylique ou d'une amine secondaire à une température de 50 à 120°C jusqu'à un indice d'époxy pratiquement égal à zéro et l'on fait réagir le composé d'addition de résine epoxy-amine resultant avec par rapport à 1 mole de groupes NH,

0,5 à 1 mole d'un phénol mono- ou polycyclique et/ou d'un alkylphénol et/ou d'un produit d'aminoalkylation de phénols mono- ou bicycliques mono-substitués ou le cas échéant en partie avec un composé réagissant avec le formaldéhyde du type de l'urée, de la mélamine ou de la guanamine et avec

0,25 à 0,9 de préférence 0,6 à 0,8 mole de formaldéhyde par position réactive avec le formaldéhyde à une température de 50 à 90°C jusqu'à l'obtention d'une fixation substantielle du formaldéhyde, le produit réactionnel étant dilué avec de l'eau après neutralisation partielle ou complète avec des acides et le cas échéant après addition de solvants organiques compatibles avec l'eau.

2. Procédé selon la revendication 1, caractérisé en ce que l'on met en oeuvre des résines époxy à base de bisphénol A et/ou de novolaques-phénoliques.

3. Procédé selon la revendication 1 et 2, caractérisé en ce que l'on met en oeuvre des monoalkylamines primaires comportant au moins quatre atomes de carbone.

4. Procédé selon les revendications 1 à 3, caractérisé en ce que l'on met en oeuvre des mélanges de monoalkylamines et/ou d'alcoylène-diamines avec des dialkylaminoalkylamines.

5. Procédé selon les revendications 1 à 4, caractérisé en ce que la réaction des groupes époxy avec les amines s'effectue à une température de 50 à 90°C.

6. Procédé selon les revendications 1 à 4, caractérisé en ce que la réaction des groupes époxy avec les composés carboxyliques s'effectue à 90 jusqu'à 120°C.

7. Procédé selon la revendication 6, caractérisé en ce qu'en tant que composés carboxyliques on met en oeuvre des acides monocarboxyliques comportant 7 à 20 atomes de C.

8. Procédé selon les revendications 6 et 7, caractérisé en ce qu'en tant que composés monocarboxyliques on met en oeuvre des semi-esters d'acides dicarboxyliques avec des monoalcools ou des composés oxazolidines.

9. Procédé selon la revendication 6, caractérisé en ce qu'en tant que composés carboxyliques on met en oeuvre des composés de fixation d'anydride de l'acide maléique sur des huiles insaturées et/ou des esters exempts d'hydroxyle des acides gras contenus dans ces huiles ou des acides gras de Talloel avec des polyols et/ou des polymères ou oligomères d'hydrocarbures insaturés à faible poids moléculaire, de préférence des polymères diéniques comportant des poids moléculaires situés entre sensiblement 400 et sensiblement 3000, dont les groupes anhydrides ont été ouverts par des composés monohydroxyliques avec formation de semi-esters.

10. Procédé selon la revendication 9, caractérisé en ce que les composés carboxyliques présentent un indice d'acide de 30-130, de préférence de 35-80 mg de KOH/g.

11. Procédé selon les revendications 9 et 10, caractérisé en ce que le nombre de groupes carboxyliques des semi-esters est réduit par réaction avec des composés monoépoxydes.

12. Procédé selon les revendications 1 à 11, caractérisé en ce que l'on met en oeuvre de phénols comportant au moins deux positions réactives au formaldéhyde, de préférence le bisphénol A.

13. Procédé selon les revendications 1 à 12, caractérisé en ce que l'on remplace 0,1 à 0,4 mole du composé phénolique mis en oeuvre par des composés amino réagissant avec le formaldéhyde, du type de l'urée, de la thiourée, de l'imidourée, de la mélamine, de l'acétoguanamine ou de la benzoguanamine ou des mélanges de ces composés et en ce que l'on fait réagir en une étape réactionnelle commune avec le composé amino présentant des groupes amino secondaires et le formaldéhyde.

14. Procédé selon les revendications 1 à 13, caractérisé en ce que l'on remplace en totalité ou en partie le phénol mono ou polycyclique et/ou l'alkylphénol par des produits d'aminoalkylation de phénols mono ou bicycliques mono-substitués, le substituant étant un radical alcoyle comportant au moins quatre atomes de C ou un radical aralcoyle et l'amine présentant au moins deux atomes d'hydrogène amino et au moins quatre atomes de C.

15. Procédé selon la revendication 14, caractérisé en ce qu'en tant que phénols on met en oeuvre des alkylphénols comportant des radicaux alcoyle en C8 ou C9 et/ou le bisphénol A.

16. Procédé selon les revendications 14 et 15, caractérisé en ce qu'en tant qu'amines pour l'aminoalkylation on met en oeuvre des produits réactionnels obtenus à partir d'une mole d'une diamine aliphatique primaire, de préférence l'hexaméthylène-diamine et de deux moles d'un ester acrylique, de préférence d'un acrylate de butyle, d'un 2-éthylhexylacrylate ou d'un composé mono-époxy, de préférence l'ester glycidylique des acides de Koch.

17. Procédé selon les revendications 14 à 16, caractérisé en ce que l'on effectue l'amino alkylation des phénols en présence de composé d'addition de résine époxy-amine.

18. Procédé selon les revendications 16 et 17, caractérisé en ce que l'on effectue l'aminoalkylation des phénols et la réaction des phénols ou du formaldéhyde avec le composé d'addition de résine époxy-amine en une seule étape de procédé.

19. Procédé selon les revendications 1 à 18, caractérisé en ce que pour l'obtention d'une structure autoréticulante des liants on met en oeuvre un excédent molaire à 30 % en formaldéhyde par rapport au groupe NH présent.

20. Procédé selon les revendications 1 à 19, caractérisé en ce que le solvant auxiliaire organique est chassé au moins partiellement par distillation sous vide à une température de 30 à 60°C du produit réactionnel dilué avec de l'eau, après neutralisation de l'acide.

21. Procédé selon les revendications 1 à 20, caractérisé en ce que la pigmentation des liants s'effectue à l'aide d'une résine pigmentée sous forme de pâte à appliquer par frottement.

22. Application des liants cationiques produits conformément à un procédé selon les revendications 1 à 21 pour la formulation de peintures applicables par électrodéposition cathodique.